# EUROPÄISCHE PATENTSCHRIFT

(11) **EP 1 207 375 B1**
(45) Veröffentlichungstag und Bekanntmachung des Hinweises auf die Patenterteilung: **05.07.2006**
(21) Anmeldenummer: 00125054.7
(22) Anmeldetag: 16.11.2000
(51) Int. Cl.: G01F 1/84

(54) **Rohranordnung für einen Coriolis-Durchflussmesser**
Tube arrangement for a Coriolis flowmeter
Arrangement de tubes pour un débimètre à effet Coriolis

(43) Veröffentlichungstag der Anmeldung: 22.05.2002
(73) Patentinhaber: Endress + Hauser Flowtec AG, 4153 Reinach BL 1 (CH)
(72) Erfinder: Rieder, Alfred, Dr., 84034 Landshut (DE); Drahm, Wolfgang, Dr., 85435 Erding (DE)

(56) Entgegenhaltungen:
- US-A- 5 275 061
- US-A- 5 373 745
- US-A- 5 394 758
- US-A- 5 476 013
- US-A- 5 705 754

## Beschreibung

Die Erfindung betrifft eine Rohranordnung, die zu einem nach dem Coriolisprinzip arbeitenden Massedurchfluß-/Dichte-/Viskositätsmesser gehört. Dieser wird im folgenden kurz als Coriolis-Durchflußmesser bezeichnet. Derartige Coriolis-Durchflußmesser dienen zur Messung des Massedurchflusses und/oder der Dichte und/oder der Viskosität eines Fluids, das mindestens temporär in einer Rohrleitung strömt; der Coriolis-Durchflußmesser wird hierzu in die Rohrleitung eingesetzt und darin z.B. mittels Flanschen druckdicht befestigt.

In der WO-A 99/51946, insb. in Verbindung mit den Fig. 9 und 10, ist u.a. eine Rohranordnung eines Coriolis-Massedurchflußaufnehmers beschrieben, der auch ein Dichte-und/oder Viskositätsaufnehmer ist und der in eine von einem Fluid mindestens temporär durchströmte, eine Rohrleitungsachse aufweisende Rohrleitung einzusetzen ist, mit einem einzigen in einer Ebene bezüglich einer Symmetrielinie gebogenen Meßrohr, welche Rohranordnung sich zusammensetzt aus:
-- einem geraden, in einem ersten Anschlußstück mündenden Einlaßstück, das eine in der Ebene liegende Einlaßachse aufweist,
-- einem geraden, in einem zweiten Anschlußstück mündenden Auslaßstück, das eine in der Ebene liegende und mit der Einlaßachse fluchtende Auslaßachse aufweist,
-- einem Einlaßbogen,
-- einem Auslaßbogen und
-- einem Scheitelbogen, wobei
-- das Einlaßstück nahtlos mit dem Einlaßbogen und das Auslaßstück nahtlos mit dem Auslaßbogen verbunden ist und
-- der Einlaßbogen in den Scheitelbogen und dieser in den Auslaßbogen nahtlos übergeht,

In der US-A 60 06 609 ist u.a. eine Rohranordnung eines Coriolis-Massedurchflußaufnehmers beschrieben, der auch ein Dichte- und/oder Viskositätsaufnehmer ist und der in eine von einem Fluid mindestens temporär durchströmte, eine Rohrleitungsachse aufweisende Rohrleitung einzusetzen ist, mit
- einem einzigen geraden Meßrohr und
- einem Auslegerkörper,
   -- die symmetrisch zur Ebene in der Mitte des Meßrohrs fixiert ist und
   -- die bedingt, daß das Meßrohr entweder in einem ersten Biegeschwingungs-Grundmode mit einer ersten Meßrohr-Resonanzfrequenz oder in einem zum ersten Biegeschwingungs-Grundmode höherfrequenten zweiten Biegeschwingungs-Grundmode mit einer zweiten Meßrohr-Resonanzfrequenz schwingen kann,
   -- wobei im Betrieb nur der zweite Biegeschwingungs-Grundmode auftritt.

Einerseits bestehen gerade Meßrohre von Coriolis-Durchflußaufnehmern bekanntlich optimalerweise aus Titan oder Zirkonium und gebogene Meßrohre optimalerweise aus Edelstahl. Andererseits ist es aus den verschiedensten Gründen bekanntlich schwierig, Coriolis-Durchflußaufnehmer mit einem einzigen Meßrohr marktfähig zu machen.

Nur der Aufnehmer nach der genannten US-A 60 06 609 mit einem einzigen geraden Meßrohr hat bisher auf dem Markt Anerkennung gefunden. Dies ist darauf zurückzuführen, dass aufgrund des mit dem Meßrohr fest verbundenen Auslegerkörpers der Betrieb bei der zweiten Meßrohr-Resonanzfrequenz ermöglicht wird und bei dieser Frequenz der Aufnehmer sowohl gegenüber äußeren Störfrequenzen praktisch immun ist als auch nur wenig Schwingungsenergie nach außen abgibt. Im Betrieb bei der zweiten Meßrohr-Resonanzfrequenz erfährt das Meßrohr sowohl eine kleine Lateralbewegung als auch eine kleine Drehbewegung. Marktfähige Aufnehmer mit einem einzigen, in einer Ebene gebogenen Meßrohr gibt es demgegenüber noch kaum.

Die Erfinder haben sich daher zum Ziel gesetzt, das vom Aufnehmer mit geradem Meßrohr nach der US-A 60 06 609 her bekannte, die beiden Biegeschwingungs-Grundmodes und die beiden Meßrohr-Resonanzfrequenzen bedingende Prinzip des Auslegerkörpers bei mit in einer Ebene gebogenem Meßrohr versehenen Coriolis-Durchflußaufnehmern nutzbar zu machen.

Zur Erreichung dieses Zieles besteht die Erfindung daher in einer Rohranordnung eines Coriolis-Massedurchfluß-/Dichte-/Viskositätsmessers, der in eine von einem Fluid mindestens temporär durchströmte, eine Rohrleitungsachse aufweisende Rohrleitung einzusetzen ist, welche Rohranordnung aufweist:
- ein einziges, in einer Ebene bezüglich einer Symmetrielinie symmetrisch gebogenes, einstückiges Rohr, das sich zusammensetzt aus:
   -- einem geraden, in einem ersten Anschlußstück mündenden Einlaßstück, das eine in der Ebene liegende Einlaßachse aufweist,
   -- einem geraden, in einem zweiten Anschlußstück mündenden Auslaßstück, das eine in der Ebene liegende und mit der Einlaßachse fluchtende Auslaßachse aufweist,
   -- einem Einlaßbogen,
   -- einem Auslaßbogen,
   -- einem Scheitelbogen,
   -- einem geraden, den Einlaßbogen mit dem Scheitelbogen verbindenden ersten Schenkel-Rohrstück und
   -- einem geraden, den Auslaßbogen mit dem Scheitelbogen verbindenden zweiten Schenkel-Rohrstück,
      --- welches erste Schenkel-Rohrstück und welches zweite Schenkel-Rohrstück durch einen starren Trägerkörper hindurchgeführt und daran zur Festlegung eines ein erstes Schwingsystem bildenden Meßrohrs fixiert sind,
      --- wobei die Masse des Trägerkörpers mindestens zehnmal bis 50-mal so groß wie die Masse des leeren Meßrohrs ist,
- einen ersten Auslegerkörper,
   -- der symmetrisch zur Ebene in der Mitte des Scheitelbogens mittels eines ersten Federkörpers fixiert ist,
   -- dessen Masse in der Größenordnung der Masse des leeren Meßrohrs liegt und
   -- der bedingt, daß das Meßrohr entweder in einem ersten Schwingungs-Grundmode mit einer ersten Meßrohr-Resonanzfrequenz oder in einem zum ersten Schwingungs-Grundmode höherfrequenten zweiten Schwingungs-Grundmode mit einer zweiten Meßrohr-Resonanzfrequenz schwingen kann, wobei
   -- im Betrieb nur der zweite Schwingungs-Grundmode auftritt und
   -- das Einlaßstück, der Einlaßbogen, der Trägerkörper, der Auslaßbogen und das Auslaßstück ein zweites Schwingsystem bilden, dessen Resonanzfrequenz höchstens gleich dem 0,5-Fachen der zweiten Meßrohr-Resonanzfrequenz des mit Wasser gefüllten Meßrohrs ist,
   -- welcher erste Federkörper eine so bemessene Federsteife aufweist, dass ein von erstem Auslegerkörper und erstem Federkörper gebildetes drittes Schwingsystem eine Resonanzfrequenz hat, die bei mit Wasser gefülltem Meßrohr etwa gleich dem 0,8-Fachen der zweiten Meßrohr-Resonanzfrequenz ist, und
- einen zweiten Auslegerkörper,
   -- der symmetrisch zur Ebene am Trägerkörper gegenüber dem Scheitelbogen mittels eines zweiten Federkörpers fixiert ist und
   -- dessen Masse mindestens zehnmal so groß ist wie die Masse des ersten Auslegerkörpers,
      --- welcher zweite Federkörper eine so bemessene Federsteife aufweist, dass ein von zweitem Auslegerkörper und zweitem Federkörper gebildetes viertes Schwingsystem eine Resonanzfrequenz hat, die bei mit Wasser gefülltem Meßrohr etwa gleich der zweiten Meßrohr-Resonanzfrequenz ist.

Nach einer bevorzugten Ausgestaltung der Erfindung ist das Rohr in V-Form gebogen.

Im Gegensatz zu Coriolis-Durchflußaufnehmern nach der oben erwähnten US-A 60 06 609, bei denen der Auslegerkörper fest am Meßrohr fixierter ist, kann, wie die Erfinder erkannt haben, bei in einer Ebene gebogenem Meßrohr entsprechend der Erfindung dessen vollständige Ausbalancierung nur dadurch erreicht werden, dass der Auslegerkörper nicht fest, sondern lediglich über einen Federkörper am Meßrohr fixiert ist.

Ein erster wesentlicher Vorteil der Erfindung besteht darin, dass mit ihr Coriolis-Massedurchfluß-/Dichte-/Viskositätsaufnehmer mit in einer ebene gebogenem, einzigem Meßrohr ermöglicht werden, die sowohl gegenüber äußeren Störfrequenzen praktisch immun sind als auch nur wenig Schwingungsenergie nach außen abgeben, so dass der Aufnehmer eine vertretbare Energieaufnahme hat.

Ein weiterer Vorteil ist, dass die Baulänge der Aufnehmer also die Länge entlang der Einlaß/Auslaßachse, im Vergleich zu der Baulänge der vorschriebenen Anordnung nach der WO-A 99/51946, wesentlich kürzer ist. Dies ist u.a. auf die V-Form des Meßrohrs zurückzuführen. Insgesamt ergibt sich daher ein Kompaktaufnehmer, der auch die heute vom Markt gewünschte Meßgenauigkeit von etwa 0,5% aufweist.

Die Erfindung wird nun anhand der Figuren der Zeichnung näher erläutert, in der ein Ausführungsbeispiel dargestellt ist. Funktionsgleiche Teile sind in den einzelnen Figuren mit denselben Bezugszeichen versehen, jedoch in nachfolgenden Figuren nur dann wiederholt, wenn es sinnvoll erscheint.
- Fig. 1: zeigt in Vorderansicht eine Rohranordnung eines Coriolis-Massedurchflußaufnehmers,
- Fig. 2: zeigt in Draufsicht die Rohranordnung der Fig. 1, und
- Fig. 3: zeigt perspektivisch die Rohranordnung der Fig. 1 und 2.

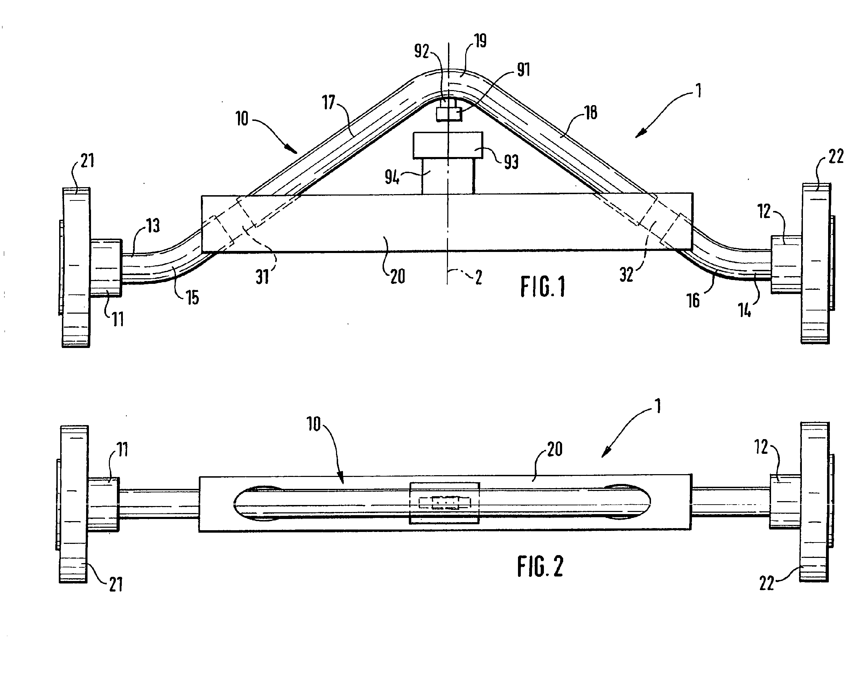

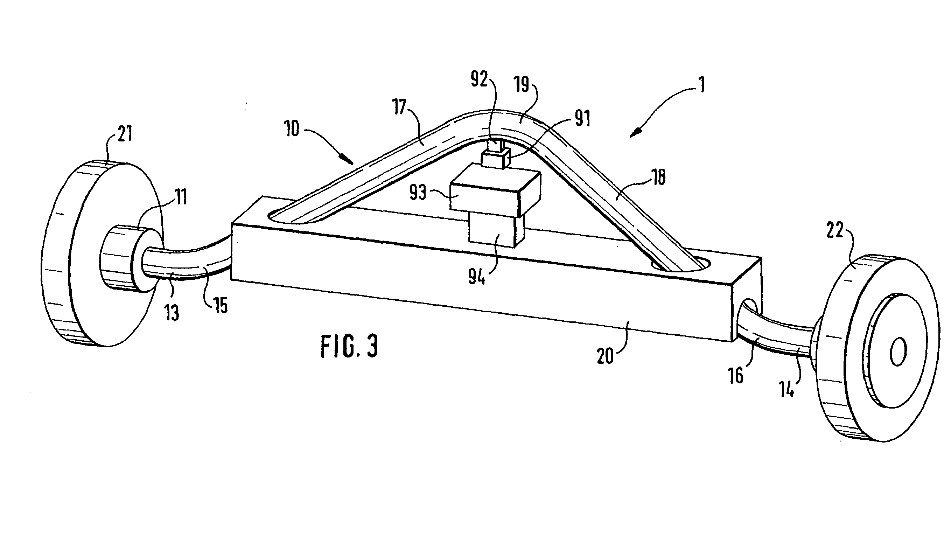

In den Fig. 1 bis 3 ist ein Ausführungsbeispiel einer Rohranordnung 1 nach der Erfindung in Vorderansicht bzw. Draufsicht bzw. perspektivisch dargestellt. Die Figuren werden im folgenden gemeinsam erläutert.

Die Rohranordnung 1 ist wesentlicher Bestandteil eines Coriolis-Massedurchfluß-/Dichte-/Viskositätsmessers, der in eine von einem Fluid mindestens temporär durchströmte, eine Rohrleitungsachse aufweisende Rohrleitung einzusetzen ist; hierzu dienen im Ausführungsbeispiel Flansche 21, 22 die an der Rohranordnung 1 fixiert, insb. damit hartverlötet oder verschweißt sind.

Die Rohranordnung 1 selbst weist ein einziges, in einer Ebene bezüglich einer Symmetrielinie 2 symmetrisch gebogenes, einstückiges Rohr auf, das bevorzugt eine V-Form hat. Das rohr umfaßt ein gerades, in einem ersten Anschlußstück 11 mündendes Einlaßstück 13, das eine in der Ebene liegende Einlaßachse aufweist. Die Symmetrielinie 2 ist in Fig. 1 senkrecht zur Einlaßachse.

Ferner gehört zum Rohr ein gerades, in einem zweiten Anschlußstück 12 mündendes Auslaßstück 14, das ebenfalls eine in der Ebene liegende und mit der Einlaßachse fluchtende Auslaßachse aufweist. Somit fallen Ein- und Auslaßachse mit der verlängert gedachten Achse der Rohrleitung zusammen, wenn die Rohranordnung 1 in die Rohrleitung eingesetzt ist.

Das Rohr umfaßt ferner einen Einlaßbogen 15, einen Auslaßbogen 16, einen Scheitelbogen 19, ein gerades, den Einlaßbogen 15 mit dem Scheitelbogen 19 verbindendes erstes Schenkel-Rohrstück 17 und ein gerades, den Auslaßbogen 16 mit dem Scheitelbogen 19 verbindendes zweites Schenkel-Rohrstück 18.

Das erste Schenkel-Rohrstück 17 und das zweite Schenkel-Rohrstück 18 sind durch einen starren Trägerkörper 20 hindurchgeführt und darin zur Festlegung eines schwingfähigen Meßrohrs 10 fixiert; dies ist durch eine jeweilige Fixierstelle 31, 32 in Fig. 1 veranschschaulicht. Die Fixierung erfolgt insb. durch Hartverlöten oder Schweißen. Das Meßrohr 10 ist somit durch die Fixierstellen 31, 32 im Trägerkörper 20 begrenzt.

Das Meßrohr 10 wird somit von einem Teil des Schenkel-Rohrstücks 17, dem Scheitelbogen 19 und einem Teil des Schenkel-Rohrstücks 18 gebildet, ist schwingfähig und bildet somit ein erstes Schwingsystem, wie es für die Funktion eines Coriolis-Massedurchfluß/Dichte/Viskositätsmessers erforderlich ist.

Im Ausführungsbeispiel der Figuren ist der Trägerkörper 20 ein gerader Körper mit rechteckigem Querschnitt, und es sind die in der Nähe des Einlaßbogens 15 liegenden Teile des ersten Schenkel-Rohrstücks 17 und dazu gegenüberliegend die in der Nähe des Auslaßbogens 16 liegenden Teile des zweiten Schenkel-Rohrstücks 18 durch den Trägerkörper 20 hindurchgeführt und darin fixiert.

Die Masse des Trägerkörpers 20 ist mindestens zehnmal bis 50-mal so groß wie die Masse des leeren Meßrohrs 10. Der Trägerkörper 20 besteht insb. aus Vollmaterial, hat aber natürlich Schrägbohrungen für das Meßrohr 10. Es ist auch möglich, ein quaderförmiges Rohr, einen Profilkörper mit dazu ähnlichen Schwingungs-Eigenschaften oder einen aus einzelnen Platten zusammengesetzten Körper als Trägerkörper 20 zu verwenden.

Die Rohranordnung 1 weist ferner einen ersten Auslegerkörper 91 auf, der symmetrisch zur Ebene in der Mitte des Scheitelbogens 19 mittels eines ersten Federkörpers 92 fixiert ist. Die Masse des Auslegerkörpers 91 ist in der Größenordnung der Masse des leeren Meßrohrs 10 zu wählen; dies schließt ein, dass diese Masse auch kleiner als die Masse des leeren Meßrohrs 10 sein kann, insb. kann sie ein Drittel bis ein Fünftel kleiner sein. Der Auslegerkörper 91 ist insb. als Quader ausgebildet.

Der Auslegerkörper 91 bedingt, dass das Meßrohr 10 entweder in einem ersten Schwingungs-Grundmode mit einer ersten Meßrohr-Resonanzfrequenz oder in einem zum ersten Schwingungs-Grundmode höherfrequenten zweiten Schwingungs-Grundmode mit einer zweiten Meßrohr-Resonanzfrequenz schwingen kann. Allerdings ist im Betrieb des Coriolis-Massedurchfluß-/Dichte-/Viskositätsmessers sicherzustellen, dass nur der zweite Schwingungs-Grundmode auftritt.

Die gegenseitige Bewegung von Meßrohr und Auslegerkörper in den beiden Schwingungs-Grundmodes ist vom Prinzip her die gleiche wie die Bewegung der entsprechenden Komponenten des Coriolis-Massedurchfluß-/Dichte-/Viskositätsaufnehmers nach der erwähnten US-A 60 06 609, siehe dort die Fig. 12 und 13 mit Beschreibung.

Einlaßstück 13, Einlaßbogen 15, Trägerkörper 20, Auslaßbogen 16 und Auslaßstück 14 bilden zusätzlich zum ersten Schwingsystem des schwingfähigen Meßrohrs 10 ein zweites Schwingsystem; es hat - für sich betrachtet - eine Resonanzfrequenz, die so zu bemessen ist, dass sie höchstens gleich dem 0,5-Fachen der zweiten Meßrohr-Resonanzfrequenz des mit Wasser gefüllten Meßrohrs 10 ist.

Der erste Federkörper 92 weist eine so bemessene Federsteife auf, dass ein von Auslegerkörper 91 und Federkörper 92 gebildetes drittes Schwingsystem - für sich betrachtet - eine Resonanzfrequenz hat, die bei mit Wasser gefülltem Meßrohr etwa gleich dem 0,8-Fachen der zweiten Meßrohr-Resonanzfrequenz ist. Der Federkörper 92 ist insb. als Blattfeder ausgebildet.

Ein zweiter Auslegerkörper 93 ist symmetrisch zur Ebene am Trägerkörper 20 gegenüber dem Scheitelbogen 19 mittels eines zweiten Federkörpers 94 fixiert. Die Masse des zweiten Auslegerkörpers 93 ist mindestens zehnmal so groß wie die Masse des leeren Meßrohrs 10 zu wählen. Der Auslegerkörper 93 ist insb. als Quader ausgebildet.

Der zweite Federkörper 94 weist eine so bemessene Federsteife auf, dass ein von Auslegerkörper 93 und Federkörper 94 gebildetes viertes Schwingsystem - für sich betrachtet - eine Resonanzfrequenz hat, die bei mit Wasser gefülltem Meßrohr etwa gleich der zweiten Meßrohr-Resonanzfrequenz ist. Der Federkörper 94 ist insb. wieder als Blattfeder ausgebildet.

Bei einer mittels eines Rohres der Nennweite 25 mm realisierten Rohranordnung war die Masse des Meßrohrs 10 viermal so groß wie die Masse des Auslegerkörpers 91 und die Masse des Auslegerkörpers 93 40-mal so groß wie die Masse des Auslegerkörpers 91.

Wenn das Meßrohr 10, wie beabsichtigt, mit der zweiten Meßrohr-Resonanzfrequenz schwingt, schwingt auch das zweite Schwingsystem (Einlaßstück 13, Einlaßbogen 15, Trägerkörper 20, Auslaßbogen 16 und Auslaßstück 14) auf dieser Frequenz. Diese Schwingungen - wie auch alle anderen - erfolgen senkrecht zur genannten Ebene, in Fig. 1 also senkrecht zur Zeichenebene.

Im Betrieb bei den angegebenen Resonanzfrequenzen bewegen sich die Auslegerkörper 91, 93 jeweils gegenphasig zum Meßrohr 10. Dadurch stellt sich an den Fixierstellen 31, 32 des Meßrohrs 10 im Trägerkörper 20 eine Kombination von Lateral- und Drehbewegung ein, die sich zu den Flanschen 21, 22 hin auf ein Minimum abbaut.

## Patentansprüche

1. Rohranordnung (1) eines Coriolis-Massedurchfluß-/Dichte-/Viskositätsmessers, der in eine von einem Fluid mindestens temporär durchströmte, eine Rohrleitungsachse aufweisende Rohrleitung einzusetzen ist, welche Rohranordnung (1) aufweist:
- ein einziges, in einer Ebene bezüglich einer Symmetrielinie (2) symmetrisch gebogenes, einstückiges Rohr, das sich zusammensetzt aus:
-- einem geraden, in einem ersten Anschlußstück (11) mündenden Einlaßstück (13), das eine in der Ebene liegende Einlaßachse aufweist,
-- einem geraden, in einem zweiten Anschlußstück (12) mündenden Auslaßstück (14), das eine in der Ebene liegende und mit der Einlaßachse fluchtende Auslaßachse aufweist,
-- einem Einlaßbogen (15),
-- einem Auslaßbogen (16),
-- einem Scheitelbogen (19),
-- einem geraden, den Einlaßbogen (15) mit dem Scheitelbogen (19) verbindenden ersten Schenkel-Rohrstück (17) und
-- einem geraden, den Auslaßbogen (16) mit dem Scheitelbogen (19) verbindenden zweiten Schenkel-Rohrstück (18),
--- welches erste Schenkel-Rohrstück (17) und welches zweite Schenkel-Rohrstück (18) durch einen starren Trägerkörper (20) hindurchgeführt und daran zur Festlegung eines ein erstes Schwingsystem bildenden Meßrohrs (10) fixiert sind, wobei das Meßrohr (10) von einem Teil des ersten Schenkel - Rohnstücks (17), dem Scheitelbogen (19) und einem teil des zweiten Schenkel - Rohrstücks (18) gebildet wird,
--- wobei die Masse des Trägerkörpers (20) mindestens zehnmal bis 50-mal so groß wie die Masse des leeren Meßrohrs (10) ist,
- einen ersten Auslegerkörper (91),
-- der symmetrisch zur Ebene in der Mitte des Scheitelbogens (19) mittels eines ersten Federkörpers (92) fixiert ist,
-- dessen Masse in der Größenordnung der Masse des leeren Meßrohrs (10) liegt und
-- der bedingt, daß das Meßrohr entweder in einem ersten Schwingungs-Grundmode mit einer ersten Meßrohr-Resonanzfrequenz oder in einem zum ersten Schwingungs-Grundmode höherfrequenten zweiten Schwingungs-Grundmode mit einer zweiten Meßrohr-Resonanzfrequenz schwingen kann,
-- wobei im Betrieb nur der zweite Schwingungs-Grundmode auftritt und,
-- das Einlaßstück (13), der Einlaßbogen (15), der Trägerkörper (20), der Auslaßbogen (16) und das Auslaßstück (14) ein zweites Schwingsystem bilden, dessen Resonanzfrequenz höchstens gleich dem 0,5-Fachen der zweiten Meßrohr-Resonanzfrequenz des mit Wasser gefüllten Meßrohrs (10) ist,
-- welcher erste Federkörper (92) eine so bemessene Federsteife aufweist, dass ein von erstem Auslegerkörper (91) und erstem Federkörper (92) gebildetes drittes Schwingsystem eine Resonanzfrequenz hat, die bei mit Wasser gefülltem Meßrohr etwa gleich dem 0,8-Fachen der zweiten Meßrohr-Resonanzfrequenz ist, und
- einen zweiten Auslegerkörper (93),
-- der symmetrisch zur Ebene am Trägerkörper (20) gegenüber dem Scheitelbogen (19) mittels eines zweiten Federkörpers (94) fixiert ist und
-- dessen Masse mindestens zehnmal so groß wie die Masse des ersten Auslegerkörpers (91) ist,
--- welcher zweite Federkörper (94) eine so bemessene Federsteife aufweist, dass ein von zweitem Auslegerkörper (93) und zweitem Federkörper (94) gebildetes viertes Schwingsystem eine Resonanzfrequenz hat, die bei mit Wasser gefülltem Meßrohr etwa gleich der zweiten Meßrohr-Resonanzfrequenz ist.

2. Rohranordnung nach Anspruch 1, bei dem das Rohr in V-Form gebogen ist.

## Claims

1. Piping layout (1) of a Coriolis flow meter-densitometer -viscometer, to be introduced in a pipe presenting a tube axis and being at least temporarily traversed by a fluid, the said piping layout (1) comprising:
- a unique one-piece tube, symmetrically curved in a plane with respect to a line of symmetry, the said tube comprising:
■ a straight inlet part (13) meeting a first connection part (11), the said inlet part comprising an inlet axis situated in the said plane,
■ a straight inlet part (14) meeting a first connection part (12), the said inlet part comprising an inlet axis situated in the said plane and an outlet axis aligned with the inlet axis,
■ an inlet elbow (15),
■ an outlet elbow (16),
■ an apex elbow (19),
■ a first straight branch tube part (17) connecting the inlet elbow (15) with the apex elbow (19),
■ a second straight branch tube part (18) connecting the outlet elbow (16) with the apex elbow (19),
--- the said first branch tube part (17) and the said second branch tube part (18) being guided through a rigid support body (20) and being attached to this body for fixing a measurement tube (10) which forms a first oscillating system , the measurement tube (10) being formed by a portion of the first branch tube part (17), the apex elbow (19) and a portion of the second branch tube part (18),
--- the mass of the support body (20) being at least ten to fifty times bigger than the mass of the empty measurement tube (10),
- a first cantilever body (91),
■ the said body being attached symmetrically in respect to the plane in the centre of the apex elbow (19) by means of a spring body (92) ,
■ the mass of the said body having an order of magnitude corresponding the mass of the empty measurement tube (10), and
■ the said body creating that the measurement tube can oscillate either in a first oscillation basic-mode with a first resonant frequency of the measurement tube or in a second oscillation basic-mode with the second resonant frequency of the measurement tube , the said second oscillation basic mode having a higher frequency than the first oscillation basic mode,
■ the second oscillation basic mode existing only when in service and,
■ the inlet part (13), the inlet elbow (15), the support body (20), the outlet elbow (16) and the outlet part (14) forming a second oscillation system whose resonant frequency is equal to at least 0,5 times the second resonant frequency of the measurement tube (10) filled with water, and
■ the first spring body (92) having a spring stiffness so that a third oscillation system formed by the first cantilever body (91) and the first spring body (92) have a resonant frequency for the measurement tube filled with water, which is approximately equal to 0,8 times the second resonant frequency of the measurement tube , and
- a second cantilever body (93),
■ which is attached to the support body (20) opposite to the apex elbow (19) symmetrically in respect to the plane by means of a second spring body (94) and
■ the mass of the second cantilever body being at least ten times higher than the mass of the first cantilever body (91),
■ the second spring body (94) having a spring stiffness so that a fourth oscillation system formed by the second cantilever body (93) and the second spring body (94) has a resonant frequency for the measurement tube filled with water which is approximately equal to the second resonant frequency of the measurement tube.

2. Piping layout according to claim 1, where the tube is bent in a V form.

## Revendications

1. Disposition de tubes (1) d'un débitmètre Coriolis -densitomètre - viscosimètre qui est introduit dans un tube comportant un axe de tube et traversé au moins temporairement par un fluide, laquelle disposition (1) comporte :
- un seul tube monobloc courbé dans un plan de façon symétrique par rapport à une ligne de symétrie (2), lequel tube est constitué de :
■ une pièce d'entrée (13) droite débouchant dans une première pièce de connexion (11), laquelle pièce d'entrée présente un axe d'entrée situé dans un plan,
■ une pièce de sortie (14) droite débouchant dans une deuxième pièce de connexion (12), laquelle pièce de sortie présente un axe de sortie aligné avec l'axe d'entrée,
■ un coude d'entrée (15),
■ un coude de sortie (16),
■ un coude d'apex (19),
■ une première branche de pièce tubulaire (17) droite connectant le coude d'entrée (15) avec le coude d'apex (19),
■ une deuxième branche de pièce tubulaire (18) droite connectant le coude de sortie (16) avec le coude d'apex (19),
--- laquelle première branche de pièce tubulaire (17) et laquelle deuxième branche de pièce tubulaire (18) sont guidées à travers un corps de support rigide (20) et fixées sur ce corps pour immobiliser un tube de mesure (10) formant un premier système oscillant ; le tube de mesure (10) étant formé par une partie de la première branche de pièce tubulaire (17), du coude d'apex (19) et d'une partie de la deuxième branche de pièce tubulaire (18),
--- la masse du corps de support (20) étant au moins 10 à 50 fois plus importante que la masse du tube de mesure (10) vide,
--- un premier corps cantilever (91),
■ qui est fixé de façon symétrique par rapport au plan au moyen d'un premier corps de ressort (92) au milieu du coude apex (19),
■ la masse dudit corps cantilever ayant un ordre de grandeur correspondant à la masse du tube de mesure (10) vide et,
■ ledit corps cantilever entraînant une oscillation du tube de mesure, soit dans un premier mode de base d'oscillation avec une première fréquence de résonance du tube de mesure, ou dans un deuxième mode de base d'oscillation avec une deuxième fréquence de résonance du tube de mesure présentant une fréquence supérieure premier mode de base d'oscillation,
■ où seul le deuxième mode de base d'oscillation apparaît pendant le service et,
■ la pièce d'entrée (13), le coude d'entrée (15), le corps de support (20), le coude de sortie (16) et la pièce de sortie (14) formant un deuxième système d'oscillation, dont la fréquence de résonance est au moins égale à 0,5 fois la deuxième fréquence de résonance du tube de mesure (10) rempli d'eau,
■ le premier corps de ressort (92) présentant une rigidité de ressort de manière à ce qu'un troisième système d'oscillation formé par le premier corps cantilever (91) et le premier corps de ressort (92) ait une fréquence de résonance qui, pour un tube de mesure rempli d'eau, soit au moins égale à 0,8 fois la deuxième fréquence de résonance du tube de mesure, et
- un deuxième corps cantilever (93),
■ qui est fixé de façon symétrique par rapport au plan sur le corps de support (20) opposé au coude apex (19) au moyen d'un deuxième corps de ressort (94), et
■ dont la masse est au moins dix fois supérieure à la masse du premier corps de ressort (91),
■ le deuxième corps de ressort (94) présentant une rigidité de ressort de manière à ce qu'un quatrième système d'oscillation formé par le deuxième corps cantilever (93) et le deuxième corps de ressort (94) ait une fréquence de résonance qui, pour un tube de mesure rempli d'eau, soit au moins égale à la deuxième fréquence de résonance du tube de mesure.

2. Disposition selon la revendication 1, dans laquelle le tube est plié selon la forme d'un V.
